# EUROPEAN PATENT SPECIFICATION

(11) **EP 4 320 463 B1**
(45) Date of publication and mention of the grant of the patent: **25.11.2026**
(21) Application number: 22721384.0
(22) Date of filing: 08.04.2022
(51) Int. Cl.: G01S 17/42, G01S 7/481, G01S 17/89

(54) **SYSTEM AND METHOD FOR IMAGING IN THE OPTICAL DOMAIN**
SYSTEM UND VERFAHREN ZUR ABBILDUNG IM OPTISCHEN BEREICH
SYSTÈME ET PROCÉDÉ D'IMAGERIE DANS LE DOMAINE OPTIQUE

(30) Priority: 09.04.2021 EP 21305472
(43) Date of publication of application: 14.02.2024
(73) Proprietor: Centre National de la Recherche Scientifique, 75016 Paris (FR); Université Côte d'Azur, 06100 Nice (FR)
(72) Inventor: GENEVET, Patrice, 06130 GRASSE (FR); JULIANO MARTINS, Renato, 06600 ANTIBES (FR); KHADIR, Samira, 06600 ANTIBES (FR); GIUDICI, Massimo, 06250 MOUGINS (FR)
(74) Representative: IPAZ
(86) International application number: PCT/EP2022/059456
(87) International publication number: WO 2022/214665

(56) References cited:
- US-A1- 2020 025 892
- RENATO JULIANO MARTINS ET AL: "Metasurface-enhanced Light Detection and Ranging Technology", ARXIV.ORG, CORNELL UNIVERSITY LIBRARY, 201 OLIN LIBRARY CORNELL UNIVERSITY ITHACA, NY 14853, 7 April 2022 (2022-04-07), XP091202130

## Description

### TECHNICAL FIELD

The invention generally relates to optical sensing and in particular to an optical imaging system and method.

### BACKGROUND

Optical imaging systems use optical waves propagating in free space (i.e. air, outer space, vacuum, or similar medium) to image or to monitor a target environment. The use of optical waves is driven by many advantageous such as the maturity of the technologies used to generate, manipulate and detect optical waves, the almost unlimited bandwidth allowed by such waves, and the low cost necessary to deploy such technologies.

Optical imaging systems, such as LIDAR technologies, are widely deployed nowadays. Most of such systems make use of static laser sources in terms of orientation, which means that the generated optical beams are pointed, continuously or in a pulsed regime over the time, in a single pointing direction. Such features are not compatible with today's applications.

Numerous solutions have been proposed to achieve certain flexibility in the operation of such imaging systems, in particular in terms of pointing direction. Some of the proposed solutions are based on mechanically assisted devices to change the pointed direction of an optical imaging system. However, such solutions are only compatible with applications having limited scanning speed. Further, they require a large footprint and a high-power consumption.

US 2020/025892 A1 discloses a LiDAR device comprising a beam steering unit including a matrix of micro-pillars to deflect the laser beam.

Other known solutions rely on active optical devices to tune the pointed direction of an optical imaging system. For example, US10665953 discloses an optical imaging system relying on active optical devices where a metasurface is coupled to liquid crystals associated with resonant antennas, which makes it possible to modify the local reflection phases of the output optical beams. However, the use of liquid crystals results in a complex electronics architecture, considerable reduction of the scanning speed, and limited deflection angles. In addition, imaging systems based on active optical devices have a lot of drawbacks, such as a high power consumption and complex driver mechanism.

There is accordingly a need for an improved optical imaging system and method.

### SUMMARY

In order to address these and other problems, there is provided an optical imaging system comprising a transmitter unit and a receiver unit as set out in the appended set of claims.

There is also provided an imaging method as set out in the appended set of claims.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
Figure 1 represents a schematic diagram of an optical imaging system, according to some embodiments of the invention;
Figure 2 illustrates the field of view of a spatial light modulator, according to some embodiments of the invention;
Figure 3 illustrates the field of view of a transmissive deflecting device, according to some embodiments of the invention;
Figure 4 represents an exemplary transmissive deflecting device, according to some embodiments of the invention;
Figure 5 represents another exemplary transmissive deflecting device, according to some embodiments of the invention;
Figure 6 is a flowchart illustrating a method for optical imaging, according to some embodiments of the invention;
Figure 7 represents the performance of the optical imaging system in a real-world environment;
Figure 8(a) represents a target environment illuminated by two fields of view from a transmitter unit, according to some embodiments of the invention; and
Figure 8(b) represents a multi-resolution-zone image generated by a receiver unit, according to some embodiments of the invention.

### DETAILED DESCRIPTION

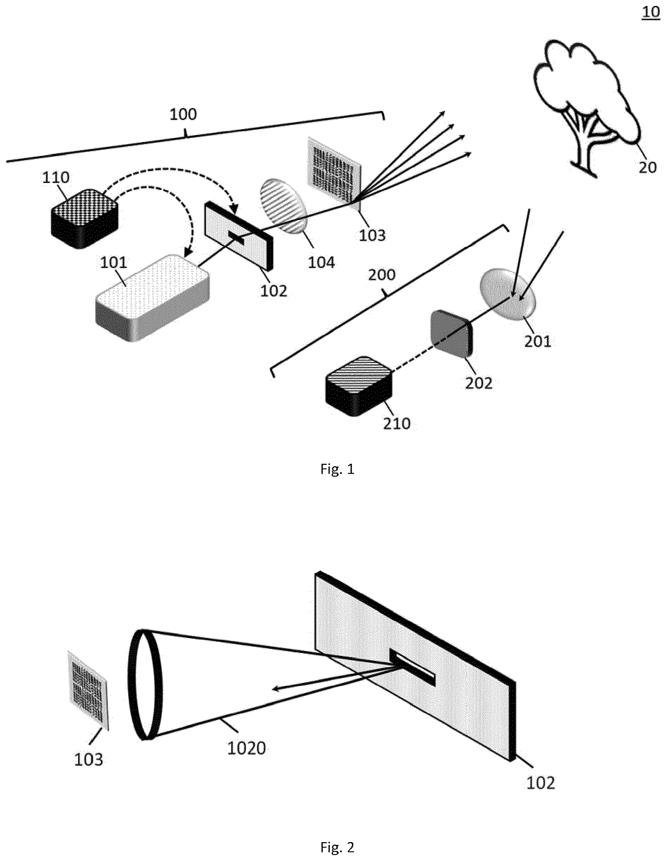

Figure 1 represents an optical imaging system 10 enabling the characterization of a target environment 20 by making use of optical beams, according to some embodiments of the invention. The characterization of a target environment 20 according to the embodiments of the invention relies on the use of flexible optical beams in terms of pointed direction.

The invention may be implemented in any system that uses light to interact with or to monitor a two-dimensional or three-dimensional target environment 20 that cannot easily be covered using a static camera. In an exemplary application of the invention, the imaging system 10 may be employed as a LIDAR (acronym for "Light Detection And Ranging") system to make high-resolution depth maps, in various fields, for example and without limitation, geology, forestry, archaeology, and land mapping. The imaging system may also be deployed in autonomous vehicles to provide real-time information about the surrounding environment 20 of the vehicle. In such application, the imaging system may replace a large number of cameras whose characteristics in terms of orientation and in terms of operational wavelength are generally static over the time and that cannot effectively cope with weather conditions and/or with the failure of one of them. The imaging system may also be used in robotics for the perception of the surrounding environment 20 and for the classification of identified objects.

Advantageously, the embodiments of the invention provide a compact and reconfigurable optical imaging system 10 with a small footprint and reduced power consumption. Such features of the optical imaging system 10 are compatible with numerous terrestrial, airborne, and mobile applications, including astronomy and spaceflight, e.g. satellites.

As shown in figure 1, the optical imaging system 10 according to the embodiments of the invention comprises a transmitter unit 100 configured to transmit optical beams toward a target environment 20 that may comprise a plurality of target objects. Various optical phenomena may occur when an optical beam interacts with the matter of a given target object. Such phenomena include scattering, reflection, absorption, refraction and diffraction of light. Some of these phenomena cause the return of a portion of the transmitted optical beam to the imaging system after a certain delay. The returned portion of the transmitted optical beam may have different properties in terms of intensity, wavelength, phase, and/or polarization with respect to the originally transmitted optical beam. The optical imaging system 10 further comprises a receiver unit 200 configured to receive and to process the returned portion of the transmitted optical beams. Advantageously, the transmitter unit 100 and the receiver unit 200 may be arranged such that an optical beam transmitted by the transmitter unit 100 cannot directly reach the receiver unit 200. For example, the transmitter unit 100 and the receiver unit 200 may be arranged close to each other in a parallel way, as illustrated in figure 1.

More specifically, with reference to figure 1, the transmitter unit 100 of the optical imaging system 10 comprises a light-emitting source 101 configured to generate a first optical beam at a given wavelength. The first optical beam may be coupled into an optical fiber or may be configured to propagate in free space in a predefined direction. The light-emitting source 101 may be configured to operate in a continuous mode in which the characteristics to the optical field representing the first optical beam remain constant over the time. These characteristics of the optical field may include the intensity, the central wavelength and/or the state of polarization.

According to some embodiments, the light-emitting source 101 may be configured to operate in a pulsed mode in which the light-emitting source 101 is alternatively turned on and off, steadily or irregularly over the time. When turned on, the light-emitting source 101 may be configured to operate in the same manner as in a continuous mode, as previously described. The use of a pulsed mode makes it easy to determine the position of a target object by measuring the time delay taken by an optical beam to return to the receiver unit 200.

According to some embodiments, the light-emitting source 101 is further configured to modulate the first optical beam using a modulating signal which may be electrical or optical. For example, either the intensity or the frequency of the optical field representing the first optical field may be modulated. Alternatively, both the intensity and the frequency of the optical may be simultaneously modulated.

According to some embodiments, the light-emitting source 101 may be configured to operate in the ultraviolet, visible, or infrared region of the electromagnetic spectrum, the infrared radiation comprising the following three bands: Near-infrared, Mid-infrared and Far-infrared. Advantageously, the central wavelength of the optical field representing the first optical beam may be chosen depending on the light absorption properties of the target objects of the target environment 20, and by taking into consideration the outdoor conditions occurring outside the optical imaging system 10, such as the weather conditions. In particular, the central wavelength may be chosen far enough from the wavelength absorption band of the target objects of the target environment 20.

In an exemplary embodiment, the light-emitting source 101 may be configured to operate in the mid-infrared region of the electromagnetic spectrum (3 to 50 µm). Although the invention is not limited to such embodiment, it should be noted that the invention has particular advantages when the light-emitting source 101 operates in the mid-infrared region of the electromagnetic spectrum, due to the high transparency of the atmosphere at such wavelengths.

As shown in figure 1, the transmitter unit 100 of the optical imaging system 10 further comprises a spatial light modulator 102. A spatial light modulator 102 may comprise an optical input and an optical output. A spatial light modulator 102 is configured to receive the first optical beam through its optical input. The spatial light modulator 102 presents at its optical output a first field of view 1020 that delimits the volume of space that may be crossed by optical beams coming from the spatial light modulator 102. Figure 2 depicts an illustrative example of a first field of view 1020 that has the shape of a cone. More generally, the first field of view 1020 may be measured horizontally, vertically, or diagonally with respect to a reference direction. The spatial light modulator 102 is further configured to deflect the first optical beam as received from the light-emitting source 101 in a first deflection direction within the first field of view 1020, thus generating a first deflected beam.

In one embodiment, the spatial light modulator 102 may be an active spatial light modulator 102 including a modulation input from which a modulating signal may be applied to the spatial light modulator 102 in order to change its behavior in terms of deflection direction. The modulating signal may be an electrical modulating signal. For example, a mapping between the modulating signals and the directions of deflection operated by the spatial light modulator 102 may be previously established through a calibration process.

The spatial light modulator 102 may be configured to change the first deflection direction based on the applied modulating signals, several times during a scanning period. A first deflection direction may be chosen on the basis of the previous first deflection directions, or may be independently selected.

According to some embodiments, the first field of view 1020 of the spatial light modulator 102 may be comprised between a lower threshold, for example 10 degrees, and a higher threshold, for example 60 degrees, when measured horizontally, and/or vertically.

In one embodiment, the spatial light modulator 102 may comprise two acousto-optic modulators, also called acousto-optic deflectors, arranged in series and oriented perpendicularly to each other, each of the two acousto-optic modulators being configured to deflect the optical beam at its optical input according to its own modulating signal. In such configuration, the first optical beam is first deflected by the first acousto-optic modulator according to a first angle of view defined horizontally, for example, in the first field of view 1020. After being horizontally deflected, the first optical beam enters the second acousto-optic modulator to be vertically deflected according to a second angle of view defined perpendicularly with respect of that of the first acousto-optic modulator. In this case, the first deflection direction of the first deflected optical beam is defined by the two perpendicular angles of view.

In some embodiments, each acousto-optic modulator is configured to diffract an incident optical beam into a plurality of deflected beams. Each of the deflected optical beams is associated with an order of diffraction and exhibits a given level of power.

According to non-limiting examples, while the optical deflected beam exhibiting the maximum level of power is a beam of interest and defines the first deflected beam, all the other deflected optical beams correspond to undesired optical beams. Advantageously, some of the undesired optical beams, for example those exhibiting a high level of power, may be used to conduct additional measurements, similarly to the first deflected beam.

In addition to the deflected optical beams, an acousto-optic modulator may be further configured to transmit a part of an initial optical beam passing through its optical input to its optical output, without having undergone any deflection and exhibiting a given level of power from the initial optical beam. In particular, such transmitted part of the initial optical beam may correspond to the zero order of diffraction of said acousto-optic modulator, and may be associated with a transmitted field of view, namely 1020-t (not represented in the figures). It should be noted that the transmitted field of view 1020-t may comprise at least some propagation properties of the initial optical beam, such as for example the direction of the optical beam. Therefore, a spatial light modulator 102 comprising one or more acousto-optic modulators may be further configured to:
- transmit at least one transmitted optical beam (i.e. non-deflected or at least partially non-deflected beam) corresponding to the zero order of diffraction of at least one acousto-optic modulator and associated with a transmitted field of view 1020-t, and
- deflect at least one deflected optical beam corresponding to at least another order of diffraction (for example the first order of diffraction of at least one acousto-optic modulator) and associated with the first field of view 1020.

To facilitate the understanding of the description of the following embodiments, it will be considered hereinafter that that the first field of view 1020 may comprise the transmitted field of view 1020-t.

The optical imaging system 10 further comprises a deflecting device 103 that may be arranged in front of the spatial light modulator 102 so that the deflecting device 103 is totally or partially contained in the first field of view 1020, as shown in figure 2. The deflecting device 103 comprises a two-dimensional (2D) arrangement of deflecting cells 103-i (also call phase addressing unit cell 103-i). Such an arrangement of the deflecting cells 103-i may either be regular or irregular. Each of the deflecting cells 103-i may be reachable by the first deflected beam and may be associated with an elementary field of view 1030-i.

In some embodiments, the deflecting device 103 may be totally or partially comprised in the transmitted field of view 1020-t generated by the spatial light modulator 102. Advantageously, the transmitted field of view 1020-t may be aligned with the center of deflecting device 103 (not shown in the figures). Further, one or more deflecting cells 103-i of the deflecting device 103 may be reachable by the transmitted (i.e. non-deflected) optical beam associated with a transmitted field of view 1020-t, and may be associated with an elementary field of view 1030-i.

Similarly to the spatial light modulator 102, the deflecting device 103 presents at its optical output a second field of view 1030 that delimits the volume of space which may be crossed by optical beams coming from the deflecting device 103, i.e. coming from deflecting cells 103-i. The second field of view 1030 of the deflecting device 103 may be seen as a summation of the elementary fields of view of the deflecting cells 103-i. Further, the deflecting device 103 may be configured to generate, from the first deflected beam received from the spatial light modulator 102, at least one second deflected beam using an operational deflecting cell 103-i belonging to the 2D arrangement of deflecting cells 103-i, the operational deflecting cell 103-i being defined as the deflecting cell 103-i that receives the first deflected beam from the spatial light modulator 102.

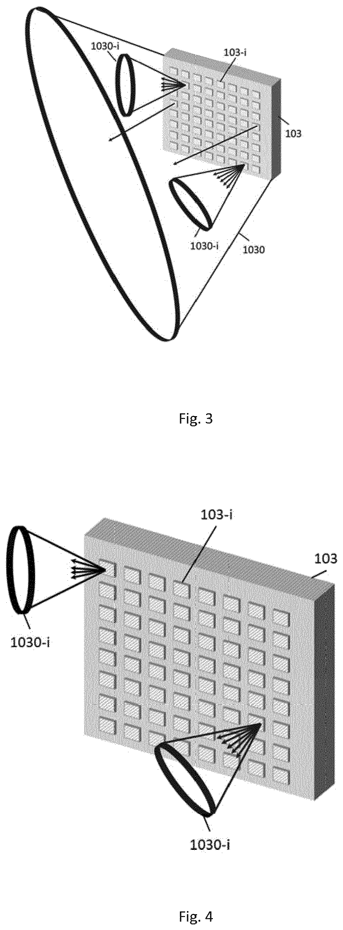

Figure 3 illustrates the operation of the deflecting device 103, according to some embodiments of the invention. In such embodiments, each of the deflecting cells 103-i may be characterized by an elementary field of view 1030-i and by a number of deflected beams generated and/or second deflected beams generated within the corresponding elementary field of view 1030-i, in response to the reception of a transmitted (i.e. non-deflected) optical beam, associated with a transmitted field of view 1020-t, and/or a first deflected beam, associated with the first field of view 1020, from the spatial light modulator 102. For example, the size of the elementary field of view 1030-i and the number of the generated second deflected beams may vary from one deflecting cell 103-i to another.

In one embodiment, the deflecting device 103 may be a passive deflecting device, which means that no power supply is required. In addition, the response of each of the deflecting cells 103-i is constant over the time and cannot be adjusted after the fabrication process. Alternatively, the deflecting device 103 may be an active deflecting device which requires a power supply and allows the response of the deflecting cells 103-i to be adjusted.

The deflecting device 103 may be a transmissive deflecting device 103, as opposed to a reflective deflecting device 103. The transmissive deflecting device 103 allows the first optical beams and the second optical beams to propagate in two different regions of space, which avoids interactions between them, the two different regions of space being separated by the transmissive deflecting device 103.

According to some embodiments, the second field of view 1030 of the deflecting device 103 may be chosen so as to be significantly wider than the first field of view 1020 of the spatial light modulator 102. For example, the second field of view 1030 may be set to be greater than twice the first field of view 1020.

In an exemplary embodiment, the deflecting device 103 may be configured such that its second field of view 1030 presents the shape of a cone, which means that any two angles of view measured perpendicularly within the second field of view 1030 are slightly equal. Alternatively, the deflecting device 103 may be configured such that its second field of view 1030 presents an asymmetrical shape.

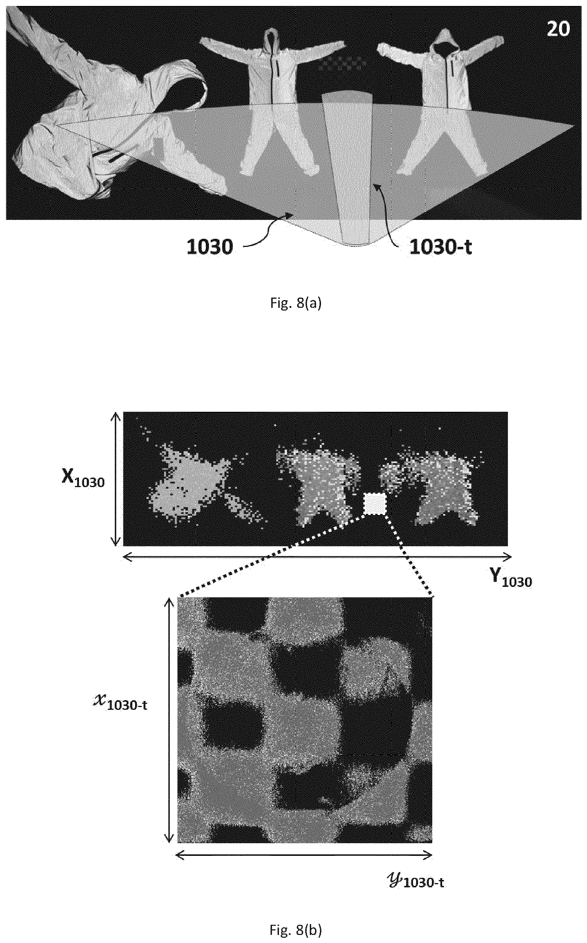

In some embodiments, the deflecting device 103 may present at least two second fields of view. Such at least two second fields of view, may be superposed at the optical output of the deflecting device 103. Figure 8(a) shows two second fields of view, 1030-t and 1030, towards a target environment 20 that may comprise a plurality of target objects. According to non-limiting examples, the two second fields of view 1030-t and 1030 may correspond to:
- at least one second field of view 1030-t, delimited by the volume of space that may be crossed by optical beams coming from the deflecting device 103, and corresponding to the elementary field of view 1030-i from the deflected beams generated in response to the reception of a transmitted (i.e. non-deflected) optical beam (associated with a transmitted field of view 1020-t) from the spatial light modulator 102, and
- at least one second field of view 1030, delimited by the volume of space that may be crossed by optical beams coming from the deflecting device 103, and corresponding to the elementary field of view 1030-i from the deflected beams generated in response to the reception of the deflected beams (associated with the first field of view 1020) from the spatial light modulator 102.

The second field of view 1030 from the deflected optical beams may be chosen so as to be significantly wider than the second field of view 1030-t from the non-deflected optical beam, which depend on the deflecting device 103 and more precisely on the deflecting cells 103-i. For example, the second field of view 1030 from the deflected optical beams may be set to be greater than twice the second field of view 1030-t from the non-deflected optical beam. In some embodiments, the transmitter unit 100 of the optical imaging system 10 may further comprises an optical lens arranged between the spatial light modulator 102 and the passive deflecting device 103. The optical lens may be a converging optical lens and may be configured to precisely focus the first deflected beam so that it is received by a single deflecting cell, thereby enhancing the quality of the second deflected beams generated by the deflecting device 103. Alternatively, the optical lens may be a diverging optical lens and may be configured to broaden the first field of view 1020, thus reducing the required distance between the spatial light modulator 102 and the deflecting device 103 so that the latter is totally contained in the first field of view 1020.

According to some embodiments, the light-emitting source 101, the spatial light modulator 102 and the deflecting device 103 may be arranged in an aligned manner along a common propagation axis. Such an alignment obviates the need for additional optical components and provides a compact transmitter unit 100. Alternatively, the elements of the transmitter unit 100 may be arranged according to different propagation axes. In such configuration, additional optical components such as mirrors may be inserted between two adjacent elements of the transmitter unit 100 to ensure the arrival of an optical beam from the optical output of one element to the optical input of the other element.

The optical imaging system 10 further comprises a control unit 110 configured to select the operational deflecting cell 103-i among the 2D arrangement of deflecting cells 103-i of the deflecting device 103, the operational deflecting cell 103-i being defined as the deflecting cell 103-i that receives the first deflected beam. In this regard, the control unit 110 may be configured to generate a control signal and to apply the generated control signal on the spatial light modulator 102 so that the first deflected beam reaches the selected deflecting cell.

In one embodiment, the control unit 110 may be further configured to control the operation of the light-emitting source 101. Such control operation may include determining the operation mode of the light-emitting source 101, determining whether the optical field that represents the first optical beam is modulated or not, and determining, in the case of a modulated optical field, the type of the modulation, the modulation index, as well as the modulating signal.

According to some embodiments, the transmitter unit 100 may further comprise an optical filter 104, such as a spatial beam blocker, arranged between the spatial light modulator 102 and the deflecting device 103 so as to eliminate undesired optical beams. Such undesired optical beams may comprise all the optical beams generated by the spatial light modulator 102 other than the first deflected beam. Although not limited to such embodiment, the use of such an optical filter 104 has particular advantages when the spatial light modulator 102 comprises one or two acousto-optic modulators.

Figure 4 shows an exemplary transmissive deflecting device 103, according to some embodiments. The transmissive deflecting device 103 comprises a regular two-dimensional arrangement of deflecting cells 103-i which has the shape of a 2D matrix arranged in rows and columns, each of the deflecting cells 103-i occupying a given item of the 2D matrix. Each of the deflecting cells 103-i is further associated to a corresponding elementary field of view 1030-i that may be characterized by a horizontal angle and a vertical angle measured respectively along the rows and the columns of the 2D matrix. For example, the deflecting cells 103-i of a given row of the 2D matrix may be configured so that their corresponding elementary fields of view have the same horizontal angle, while the vertical angle of the corresponding elementary fields of view increases according to a given curve over the deflecting cells 103-i of the considered row. Similarly, the deflecting cells 103-i of a given column of the 2D matrix may be configured so that their corresponding elementary fields of view have the same vertical angle, while the horizontal angle of the corresponding elementary fields of view increases according to a given curve over the deflecting cells 103-i of the considered column.

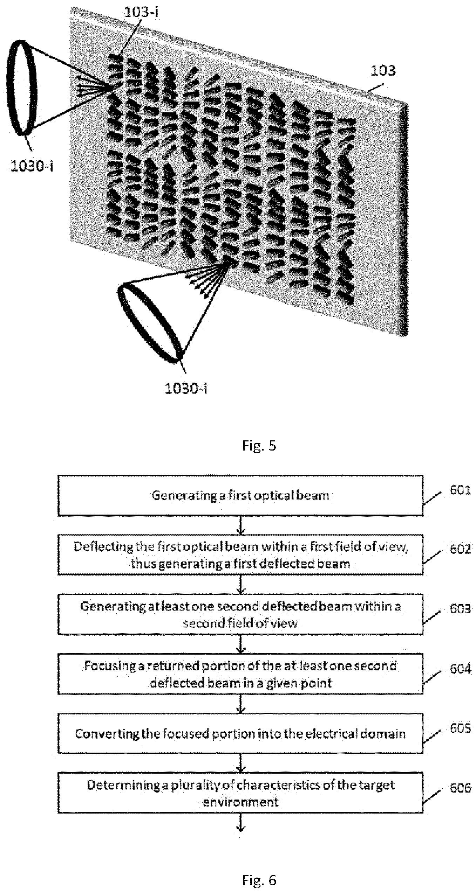

Figure 5 shows another exemplary transmissive deflecting device 103, according to some embodiments. The transmissive deflecting device 103 comprises an irregular two-dimensional arrangement of deflecting cells 103-i. Further, each of the deflecting cells 103-i may be associated with a corresponding elementary field of view 1030-i chosen independently from the elementary fields of view of the adjacent deflecting cells 103-i.

In one embodiment, the transmissive deflecting device 103 may be a diffraction grating, a blazed grating, or a blazed binary sub-wavelength grating comprising a plurality of pixels, each of the pixels being assimilated to a deflecting cell 103-i that corresponds to a corresponding elementary field of view 1030-i.

According to the invention, a passive transmissive deflecting device 103 is an optical metasurface device comprising a substrate and a resonator structure. The substrate may comprise silica, silicon or any semiconductor material. The resonator structure may comprise a metal structure, a dielectric structure, and/or semiconductor structure. The resonator may also comprise one or more arrays of resonators formed on or in the substrate. The arrays of resonators correspond to a plurality of pixels, each of the pixels being assimilated to a deflecting cell 103-i (associated with an elementary field of view 1030-i).

According to non-limiting examples, an optical metasurface may have a size ranging substantially from 1 millimeters up to 4 centimeters, in the direction of the 2D arrangement of deflecting cells 103-i. An optical metasurface may be an optical plate with a global thickness ranging substantially from 100 nanometers up to about a few wavelength, depending on materials and operational wavelengths. The global thickness may take into account the thickness of the substrate and the thickness of the resonator structure. The resonators may be metallic antennas and/or dielectric antennas comprising one or more nanopillars (also called rods) directed substantially perpendicularly to the plan of the optical plate. The nanopillars may have different geometries, which can be characterized for example by a form, a size (or a diameter for cylindrical nanopillars) and/or a height. The size of a nanopillar may be for example comprised between 80 nanometers and 300 nanometers. The height h of a nanopillar may range from 10 nanometers to 2 micrometers. In some embodiments, height *h* of a nanopillar may be defined as a function of the wavelength *λ* of the optical beam, the refractive index of the material forming the nanopillars *nₚ* and the refractive index of the material surrounding the pillars *n*₀, for example according to the following equation (1) : $h = \frac{λ}{{n}_{p} - {n}_{0}}$ (1)

The form of the nanopillars may be for example cylindrical, round, square, rectangle or elliptical. Plasmonic antennas may comprise for example two rods joined to form a V-shape, or three rods joined to form a Y shape. Advantageously, optical metasurface with single cylindrical round antennas may be configured to generate polarization invariance from the optical beam transmission.

A deflecting cell 103-i is an array of resonators comprising two or more antennas with different geometries and/or with a variation of the nanopillars' parameters to parametrically change the optical phase between 0 and 2π. In such deflecting cell 103-i, spacing between antennas may range from 0 nanometers to about the size of a wavelength of the impinging light. According to non-limiting examples, the size s of a deflecting cell 103-i (acting like a phase addressing unit) may be defined as a function of the wavelength *λ* of the optical beam and the refractive index of the material forming the nanopillars *nₚ,* for example according to the following equation (2) : $s = \frac{λ}{2 \times {n}_{p}}$ (2)

Therefore, the nanopillars geometries and the array of resonators geometries may be varied in different ways. As a result, the optical metasurface enables a wide variety of deflecting cells 103-i in terms of optical properties, with a resolution that is adjustable (potentially up to high-resolution) to the desired application.

The deflecting cells 103-i from an optical metasurface may have for example nanopillars geometries and array of resonators geometries configured to generate a radial phase distribution selected from a hyperboloidal distribution, a spherical distribution, and a paraboloidal distribution. Alternatively, the deflecting cells 103-i may have a conical radial phase distribution enabling the plate to function as an axicon.

The second field of view 1030 of the deflecting device 103 may be comprised between 120 degrees and 180 degrees, when it is measured horizontally, and/or vertically, as illustrated in connection with figure 4.

Turning back to figure 1, the receiver unit 200 of the optical imaging system 10 may comprise a light-focusing device 201 arranged so that it does not receive the deflected beams generated and/or second deflected beams directly generated by the transmitter unit 100. For example, as depicted in figure 1, the light-focusing device 201 may be arranged along a propagation axis which is parallel to the central axis of the deflecting device 103 of the transmitter unit 100. The light-focusing device 201 may be configured to focus on a given point all the optical beams reaching its optical input. Among all the optical beams reaching the light-focusing device 201, there are portions of the deflected beams generated and/or second deflected beams (associated with second field of view 1030-t and/or 1030) returned after propagation in a target environment 20.

According to some embodiments, the light-focusing device 201 may be fixed relatively to the receiver unit 200. In addition, the light-focusing device 201 may be a passive device that does not require a power supply. For example, the light-focusing device 201 may be a converging optical lens operating in the same wavelength window as the light-emitting source 101.

The receiver unit 200 further comprises at least one photo-detector 202 configured to receive the focused optical beams and to convert them to the electrical domain through an optical to electrical conversion. When it is a returned portion of a deflected beam generated and/or a second deflected beam that is converted by the photo-detector(s) 202 to the electrical domain, the obtained signal is referred to as output electrical signal. The other signals are referred to as noise signals.

According to some embodiments, the at least one photo-detector 202 may be configured to convert (and/or receive and/or process) only part of the focused optical beams. The part of the focused optical beams may correspond to a sub-group of optical beams reaching the light-focusing device 201 associated to a sub-group of elementary field of view 1030-i. For example:
- one photo-detector 202 may be configured to receive and/or process a part of focused optical beams corresponding to a sub-group of elementary fields of view 1030-i associated with a second field of view 1030-t from the non-deflected optical beam of the transmitted field of view 1020-t, and/or
- one photo-detector 202 may be configured to receive and/or process a part of focused optical beams corresponding to a sub-group of elementary fields of view 1030-i associated with a second field of view 1030 from the deflected optical beams of the first field of view 1020.In an exemplary embodiment, an optical filter may be arranged at the optical input of the photo-detector(s) 202 or at the input of the light-focusing device 201 to eliminate the undesired optical beams that generate the noise signals. The elimination of such undesired optical beams may also be achieved by inserting an electrical filter at the electrical output of the photo-detector(s) 202.

In one embodiment, the receiver unit 200 may comprise a single photo-detector 202. In such embodiment, the electrical output signal is a real-valued signal, which represents only the intensity of the corresponding optical beam.

To some embodiments, the receiver unit 200 may comprise at least two photo-detectors 202 and a local oscillator which are configured so as to allow an optical heterodyne detection of the optical beams. In such embodiments, the electrical output signal is a complex-valued signal, which represents both the intensity and the phase of the corresponding optical beams. Advantageously, the light-emitting source 101 may be used as a local oscillator to realize a heterodyne detection. The use of a heterodyne detection in conjunction with frequency-modulated beams allows for example detecting both the position and the velocity of the target objects of the target environment 20.

According to some embodiments, the optical imaging system 10 may further comprise a processing unit 210 configured to receive and to process the output electrical signals in conjunction with the characteristics of the second deflected beams as provided by the control unit 110.

The processing unit 210 is further configured to detect target objects in the target environment 20 and to determine a plurality of characteristics of the detected target objects. The characteristics of a detected target object may include geometric characteristics such as the shape and/or the size of the object, as well as other characteristics that may include the position and the instantaneous velocity.

Advantageously, some of the characteristics of the target objects may be determined by the processing unit 210 by making use of equation (3) that rules the transmission and the reception of optical beams by means of the optical imaging system 10. ${N}_{LiDAR} = {N}_{laser} . \left[β. \frac{A}{{R}^{2}} . {T}_{f}\left(R\right). {T}_{b} \left(R\right). η\right] + {N}_{b}$ (3)

In equation (1), Nₗₐₛₑᵣ represents the number of transmitted photons, β represents an angular scattering probability, $\frac{A}{{R}^{2}}$ represents a solid angle for the collection probability, T represents light transmission in medium, η represents system efficiency including the optical losses and the laser/Field of View overlap, and N_{b} represents the background noise.

According to some embodiments, the control unit 110 may be configured to maintain constant over the time the characteristics of the optical field representing the first optical beam when changing the operational deflecting cell. Alternatively, the control unit 110 may be configured to change at least one characteristic of the optical field that represents the first optical beam when changing the operational deflecting cell. The changed characteristic of the optical field may be the intensity, the central wavelength, the state of polarization, and/or the optical phase.

According to some embodiments, the control unit 110 may further be configured to change at least once during a scanning period the operational deflecting cell. For example, the control unit 110 may be configured to use a plurality of operational deflecting cells 103-i during the scanning period according to a switching speed that can be greater than 10 Megahertz. The switching speed required to change the operational deflecting cell 103-i may be limited by the bandwidth of spatial light modulator 102.

The processing unit 210 may be configured to generate at least one image for a target environment 20 resulting from the output of the photo-detector(s) 202. In some embodiments, the receiver unit 200 may be further configured to generate a multi-resolution-zone image with only one scan of the spatial light modulator 102 (associated with a scanning period) to image a target environment 20. A multi-resolution-zone image may be an image comprising the superimposition of at least one image. According to non-limiting examples, a multi-resolution-zone image may be generated from:
- an image associated with a second field of view 1030-t from the non-deflected optical beam of the transmitted field of view 1020-t (for example a zero order of diffraction), such image providing an imaging of a small part of the target environment 20 with high resolution, and
- an image associated with a second field of view 1030 from the deflected optical beams of the first field of view 1020 (for example a first order of diffraction), such image providing an imaging of a large part of the target environment 20 with low resolution.

Figure 8(b) shows an example of a multi-resolution-zone image of a plurality of target objects, generated from the two second fields of view 1030-t and 1030 illuminating a target environment 20, as represented in figure 8(a).

As shown in figure 8(b), the multi-resolution-zone image corresponds to the superimposition of a first image (X₁₀₃₀, Y₁₀₃₀) of a large part of the target environment 20 and of a second image (*x*₁₀₃₀₋ₜ, *y*₁₀₃₀₋ₜ) of a small part of the target environment 20. According to some embodiments, the first image (X₁₀₃₀, Y₁₀₃₀) and the second image (*x*₁₀₃₀₋ₜ, *y*₁₀₃₀₋ₜ) may be generated with an optical metasurface configured to have a radial phase distribution. Moreover, the first image (X₁₀₃₀, Y₁₀₃₀) may have the same number of pixels or a different number of pixels compared to the second image (*x*₁₀₃₀₋ₜ, *y*₁₀₃₀₋ₜ). More generally, the first image (X₁₀₃₀, Y₁₀₃₀) and the second image (*x*₁₀₃₀₋ₜ, *y*₁₀₃₀₋ₜ) may respectively correspond to a low resolution image and a high resolution image. Also, the second image (*x*₁₀₃₀₋ₜ, *y*₁₀₃₀₋ₜ) may be arranged centrally with respect to the image (X₁₀₃₀, Y₁₀₃₀).

Therefore, the optical imaging system 10 may be configured to generate simultaneously (or synchronously) multi-resolution-zone image comprising two or more images having same or different sizes representing same or different parts of the target environment 20, with a same or a different image resolution. Such optical imaging system 10, generating multi-resolution-zone image with only one scan, is able to replicate the behavior of the human eye.

In an exemplary embodiment, the transmitter unit 100 of the optical imaging system 10 may comprise at least two light-emitting sources 101, each of the light-emitting sources 101 being configured to generate a first optical beam at a different or at the same wavelength. In such embodiment, the spatial light modulator 102 may be configured to deflect the first optical beams either according to a same first deflection direction or according to different first deflection directions, thus generating a plurality of first deflected beams that could be used to impinge different deflecting cells (103-i). Alternatively, a single light-emitting source 101 may be used to generate the plurality of first optical beams.

Figure 6 is a flowchart depicting the optical imaging method for imaging a target environment 20. The target environment 20 may comprise a plurality of target objects.

At step 601, a first optical beam at a given wavelength may be generated by means of a light-emitting source 101. The characteristics of the optical field which represents the first optical beam may remain constant or may vary over the time.

At step 602, the first optical beam may be deflected, by means of a spatial light modulator 102, in a first deflection direction within a first field of view 1020 to generate a first deflected beam. The first deflection direction may be determined by applying an external control signal on the spatial light modulator.

At step 603, the first deflected beam may be received by a transmissive deflecting device 103 that comprises a two-dimensional (2D) arrangement of deflecting cells 103-i. Further, at least one second deflected beam may be generated from the first deflected beam using the operational deflecting cell 103-i that receives the first deflected beam. The at least one second deflected beam may be generated according to a second field of view 1030 associated to the transmissive deflecting device 103, the second field of view 1030 being wider with respect to the first field of view 1020.

At step 604, a returned portion of the at least one second deflected beam may be received after propagation in the target environment 20 and may be focused in a given point.

At step 605, the focused portion of the at least one second deflected beam may be converted into the electrical domain through an optical to electrical conversion that may be conducted using at least one photo-detector 202, thus generating an output electrical signal.

At step 606, a plurality of characteristics of the target environment 20 may be determined from the output electrical signal. Advantageously, at step 606, a two-dimensional or a three-dimensional mapping of the target environment 20 may be determined by scanning a significant number of deflecting cells 103-i.

The optical imaging method for imaging a target environment 20 may further comprise steps of generating at least two images of the target environment 20, and then generating a multi-resolution-zone image from the at least two images of the target environment 20. The generation of the at least two images of the target environment 20 may be realize simultaneously (or synchronously), and therefore, the generation of a multi-resolution-zone image from the at least two images of the target environment 2020 may be realize instantly with a unique scan (i.e. single scan).

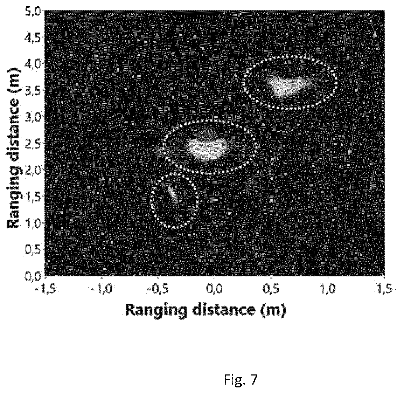

Figure 7 illustrates the performance of the optical imaging system 10 in a real-world environment 20 that comprises three target objects exhibiting different shapes and located at different positions. The mapping conducted using the optical imaging system 10 according to the embodiments of the invention allows clearly distinguishing the position and the shape of each of the three target objects.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described.

## Claims

1. An optical imaging system (10) comprising a transmitter unit (100) and a receiver unit (200), wherein said transmitter unit (100) comprises:
∘ a light-emitting source (101) configured to generate at least one first optical beam at a given wavelength;
∘ a spatial light modulator (102), associated with a first field of view (1020), configured to deflect said at least one first optical beam in a first deflection direction within said first field of view (1020) to generate a first deflected beam, by applying an external control signal;
∘ a passive transmissive deflecting device (103), associated with at least one second field of view (1030) and comprising an optical metasurface formed by a two-dimensional (2D) arrangement of deflecting cells (103-i), each of said deflecting cells (103-i) being reachable by said first deflected beam and being associated with an elementary field of view (1030-i) chosen independently from the elementary fields of view of adjacent deflecting cells (103-i), said transmissive deflecting device (103) being configured to generate at least one second deflected beam from said first deflected beam using an operational deflecting cell (103-i) of said plurality of deflecting cells (103-i) that receives said first deflected beam;
and wherein said receiver unit (200) comprises:
∘ a light-focusing device (201) configured to focus a portion of said at least one second deflected beam received after propagation in a target environment (20) located outside said transmitter unit (100);
∘ at least one photo-detector (202) configured to convert the focused portion of the second deflected beam into an output electrical signal.

2. The optical imaging system (10) of claim 1, wherein it further comprises a control unit (110) configured to select the operational deflecting cell (103-i) by generating a corresponding external control signal.

3. The optical imaging system (10) of claim 2, wherein the control unit (110) is further configured to change, at least once during a scanning period, the operational deflecting cell (103-i).

4. The optical imaging system (10) of claim 1, wherein the second field of view (1030) is wider than the first field of view (1020).

5. The optical imaging system (10) of claim 1, wherein the second field of view (1030) is comprised between 120 degrees and 180 degrees, when measured horizontally, and/or vertically.

6. The optical imaging system (10) of claim 1, wherein the light-emitting source (101) is further configured to modulate the at least one first optical beam using a modulating signal supplied by the control unit (110).

7. The optical imaging system (10) of claim 6, wherein the at least one first optical beam is intensity-modulated.

8. The optical imaging system (10) of claim 6, wherein the at least one first optical beam is frequency-modulated.

9. The optical imaging system (10) of claim 1, wherein the spatial light modulator (102) comprises a horizontally oriented acousto-optic deflector and a vertically oriented acousto-optic deflector.

10. The optical imaging system (10) of claim 1, wherein it further comprises an optical filter (104) arranged between the spatial light modulator (102) and the transmissive deflecting device (103) to eliminate undesired optical beams.

11. The optical imaging system (10) of claim 1, wherein it further comprises a processing unit (210) configured to receive a plurality of said output electrical signals obtained from the focused portion of a plurality of second deflected beams, and to determine a plurality of characteristics of the target environment (20), the plurality of characteristics including geometric characteristics.

12. The optical imaging system (10) of claim 9, wherein the first field of view (1020) further comprises a transmitted field of view (1020-t), and wherein the spatial light modulator (102) is configured to transmit at least one optical beam associated with an at least partially non-deflected beam within the transmitted field of view (1020-t).

13. The optical imaging system (10) of claim 12, wherein it further comprises a processing unit (210) and at least two photo-detectors (202), each being configured to convert a different part of the focused portion of the second deflected beam, said part corresponding to a sub-group of elementary fields of view (1030-i), and wherein said processing unit (210) is configured to generate a multi-resolution-zone image from said part of the focused portion of the second deflected beam.

14. The optical imaging system (10) of claim 1, wherein the light-focusing device (201) is a converging lens, preferably a passive scanning lens.

15. An imaging method comprising the steps of:
∘ generating (601) at least one first optical beam, by means of a light-emitting device (101);
∘ deflecting (602), by means of a spatial light modulator (102), the at least one first optical beam in a first deflection direction within a first field of view (1020) to generate a first deflected beam, by applying an external control signal on the spatial light modulator (102);
∘ generating (603), by means of a passive transmissive deflecting device (103) comprising an optical metasurface formed by a two-dimensional (2D) arrangement of deflecting cells (103-i), at least one second deflected beam from the first deflected beam within a second field of view (1030), the second field of view (1030) being wider than the first field of view (1020);
∘ focusing (604) a portion of the at least one second deflected beam received after propagation in a target environment (20);
∘ converting (605) the focused portion of the at least one second deflected beam into an output electrical signal.

16. The imaging method of claim 15, wherein it further comprises the step of:
∘ receiving a plurality of said output electrical signals obtained from the focused portion of a plurality of second deflected beams;
∘ determining (606) a plurality of characteristics of the target environment (20), the plurality of characteristics including geometric characteristics.

17. The imaging method of one of claim 15 or 16, wherein it further comprises the steps of:
∘ converting at least two different parts of the focused portion of the second deflected beam, each part corresponding to a sub-group of elementary fields of view (1030-i) for generating simultaneously at least two images of the target environment (20);
∘ generating instantly a multi-resolution-zone image from the at least two images of the target environment (20).

## Patentansprüche

1. Optisches Bildgebungssystem (10), umfassend eine Transmittereinheit (100) und eine Empfängereinheit (200), wobei die Transmittereinheit (100) umfasst:
∘ eine lichtemittierende Quelle (101), die konfiguriert ist, um mindestens einen ersten optischen Strahl mit einer gegebenen Wellenlänge zu erzeugen;
∘ einen räumlichen Lichtmodulator (102), der einem ersten Sichtfeld (1020) zugeordnet ist, der konfiguriert ist, um den mindestens einen ersten optischen Strahl in eine erste Ablenkrichtung innerhalb des ersten Sichtfelds (1020) abzulenken, um einen ersten abgelenkten Strahl zu erzeugen, durch Anlegen eines externen Steuersignals;
∘ eine passive transmissive Ablenkvorrichtung (103), die mindestens einem zweiten Sichtfeld (1030) zugeordnet ist und eine optische Metaoberfläche umfasst, die durch eine zweidimensionale (2D) Anordnung von Ablenkzellen (103-i) ausgebildet ist, wobei jede der Ablenkzellen (103-i) durch den ersten abgelenkten Strahl erreichbar ist und einem elementaren Sichtfeld (1030-i) zugeordnet ist, das unabhängig aus den elementaren Sichtfeldern benachbarter Ablenkzellen (103-i) ausgewählt ist, wobei die transmissive Ablenkvorrichtung (103) konfiguriert ist, um unter Verwendung einer betriebsfähigen Ablenkzelle (103-i) der Vielzahl von Ablenkzellen (103-i), die den ersten abgelenkten Strahl empfängt, mindestens einen zweiten abgelenkten Strahl aus dem ersten abgelenkten Strahl zu erzeugen;
und wobei die Empfängereinheit (200) umfasst:
∘ eine Lichtfokussiervorrichtung (201), die konfiguriert ist, um einen Anteil des mindestens einen zweiten abgelenkten Strahls zu fokussieren, der nach Ausbreitung in einer Zielumgebung (20) empfangen wird, die sich außerhalb der Transmittereinheit (100) befindet;
∘ mindestens einen Fotodetektor (202), der konfiguriert ist, um den fokussierten Anteil des zweiten abgelenkten Strahls in ein elektrisches Ausgangssignal umzuwandeln.

2. Optisches Bildgebungssystem (10) nach Anspruch 1, wobei es ferner eine Steuereinheit (110) umfasst, die konfiguriert ist, um die betriebsfähige Ablenkzelle (103-i) durch Erzeugen eines entsprechenden externen Steuersignals auszuwählen.

3. Optisches Bildgebungssystem (10) nach Anspruch 2, wobei die Steuereinheit (110) ferner konfiguriert ist, um mindestens einmal während einer Abtastperiode die betriebsfähige Ablenkzelle (103-i) zu ändern.

4. Optisches Bildgebungssystem (10) nach Anspruch 1, wobei das zweite Sichtfeld (1030) weiter als das erste Sichtfeld (1020) ist.

5. Optisches Bildgebungssystem (10) nach Anspruch 1, wobei das zweite Sichtfeld (1030) zwischen 120 Grad und 180 Grad liegt, wenn es horizontal und/oder vertikal gemessen wird.

6. Optisches Bildgebungssystem (10) nach Anspruch 1, wobei die lichtemittierende Quelle (101) ferner konfiguriert ist, um den mindestens einen ersten optischen Strahl unter Verwendung eines modulierenden Signals zu modulieren, das durch die Steuereinheit (110) bereitgestellt wird.

7. Optisches Bildgebungssystem (10) nach Anspruch 6, wobei der mindestens eine erste optische Strahl intensitätsmoduliert ist.

8. Optisches Bildgebungssystem (10) nach Anspruch 6, wobei der mindestens eine erste optische Strahl frequenzmoduliert ist.

9. Optisches Bildgebungssystem (10) nach Anspruch 1, wobei der räumliche Lichtmodulator (102) einen horizontal ausgerichteten akustooptischen Ablenker und einen vertikal ausgerichteten akustooptischen Ablenker umfasst.

10. Optisches Bildgebungssystem (10) nach Anspruch 1, wobei es ferner einen optischen Filter (104) umfasst, der zwischen dem räumlichen Lichtmodulator (102) und der transmissiven Ablenkvorrichtung (103) angeordnet ist, um unerwünschte optische Strahlen zu eliminieren.

11. Optisches Bildgebungssystem (10) nach Anspruch 1, wobei es ferner eine Verarbeitungseinheit (210) umfasst, die konfiguriert ist, um eine Vielzahl der elektrischen Ausgangssignale zu empfangen, die aus dem fokussierten Anteil einer Vielzahl von zweiten abgelenkten Strahlen erhalten werden, und um eine Vielzahl von Eigenschaften der Zielumgebung (20) zu bestimmen, wobei die Vielzahl von Eigenschaften geometrische Eigenschaften einschließt.

12. Optisches Bildgebungssystem (10) nach Anspruch 9, wobei das erste Sichtfeld (1020) ferner ein transmittiertes Sichtfeld (1020-t) umfasst, und wobei der räumliche Lichtmodulator (102) konfiguriert ist, um mindestens einen optischen Strahl, der einem mindestens teilweise nicht abgelenkten Strahl zugeordnet ist, innerhalb des transmittierten Sichtfelds (1020-t) zu transmittieren.

13. Optisches Bildgebungssystem (10) nach Anspruch 12, wobei es ferner eine Verarbeitungseinheit (210) und mindestens zwei Fotodetektoren (202) umfasst, die jeweils konfiguriert sind, um einen anderen Teil des fokussierten Anteils des zweiten abgelenkten Strahls umzuwandeln, wobei der Teil einer Untergruppe von elementaren Sichtfeldern (1030-i) entspricht, und wobei die Verarbeitungseinheit (210) konfiguriert ist, um ein Bild mit mehreren Auflösungszonen aus dem Teil des fokussierten Anteils des zweiten abgelenkten Strahls zu erzeugen.

14. Optisches Bildgebungssystem (10) nach Anspruch 1, wobei die Lichtfokussiervorrichtung (201) eine Sammellinse ist, vorzugsweise eine passive Abtastlinse.

15. Bildgebungsverfahren, umfassend die Schritte:
∘ Erzeugen (601) mindestens eines ersten optischen Strahls mittels einer lichtemittierenden Vorrichtung (101);
∘ Ablenken (602) des mindestens einen ersten optischen Strahls mittels eines räumlichen Lichtmodulators (102) in eine erste Ablenkrichtung innerhalb eines ersten Sichtfelds (1020), um einen ersten abgelenkten Strahl zu erzeugen, durch Anlegen eines externen Steuersignals an den räumlichen Lichtmodulator (102);
∘ Erzeugen (603), mittels einer passiven transmissiven Ablenkvorrichtung (103), die eine optische Metaoberfläche umfasst, die durch eine zweidimensionale (2D) Anordnung von Ablenkzellen (103-i) ausgebildet ist, mindestens eines zweiten abgelenkten Strahls aus dem ersten abgelenkten Strahl innerhalb eines zweiten Sichtfelds (1030), wobei das zweite Sichtfeld (1030) breiter als das erste Sichtfeld (1020) ist;
∘ Fokussieren (604) eines Anteils des mindestens einen zweiten abgelenkten Strahls, der nach Ausbreitung in einer Zielumgebung (20) empfangen wird;
∘ Umwandeln (605) des fokussierten Anteils des mindestens einen zweiten abgelenkten Strahls in ein elektrisches Ausgangssignal.

16. Bildgebungsverfahren nach Anspruch 15, wobei es ferner den Schritt umfasst:
∘ Empfangen einer Vielzahl der elektrischen Ausgangssignale, die aus dem fokussierten Anteil einer Vielzahl von zweiten abgelenkten Strahlen erhalten werden;
∘ Bestimmen (606) einer Vielzahl von Eigenschaften der Zielumgebung (20), wobei die Vielzahl von Eigenschaften geometrische Eigenschaften einschließt.

17. Bildgebungsverfahren nach einem der Ansprüche 15 oder 16, wobei es ferner die Schritte umfasst:
∘ Umwandeln von mindestens zwei verschiedenen Teilen des fokussierten Anteils des zweiten abgelenkten Strahls, wobei jeder Teil einer Untergruppe von elementaren Sichtfeldern (1030-i) entspricht, zum gleichzeitigen Erzeugen von mindestens zwei Bildern der Zielumgebung (20);
∘ sofortiges Erzeugen eines Bildes mit mehreren Auflösungszonen aus den mindestens zwei Bildern der Zielumgebung (20).

## Revendications

1. Système d'imagerie optique (10) comprenant une unité émettrice (100) et une unité réceptrice (200), dans lequel ladite unité émettrice (100) comprend :
∘ une source électroluminescente (101) configurée pour générer au moins un premier faisceau optique à une longueur d'onde donnée ;
∘ un modulateur spatial de lumière (102), associé à un premier champ de vision (1020), configuré pour dévier ledit au moins un premier faisceau optique dans une première direction de déviation à l'intérieur dudit premier champ de vision (1020) pour générer un premier faisceau dévié, en appliquant un signal de commande externe ;
∘ un dispositif de déviation transmissif passif (103), associé à au moins un second champ de vision (1030) et comprenant une métasurface optique formée par un agencement bidimensionnel (2D) de cellules de déviation (103-i), chacune desdites cellules de déviation (103-i) étant atteignable par ledit premier faisceau dévié et étant associée à un champ de vision élémentaire (1030-i) choisi indépendamment parmi les champs de vision élémentaires de cellules de déviation (103-i) adjacentes, ledit dispositif de déviation transmissif (103) étant configuré pour générer au moins un second faisceau dévié à partir dudit premier faisceau dévié à l'aide d'une cellule de déviation (103-i) fonctionnelle de ladite pluralité de cellules de déviation (103-i) qui reçoit ledit premier faisceau dévié ;
et dans lequel ladite unité réceptrice (200) comprend :
∘ un dispositif de focalisation de lumière (201) configuré pour focaliser une partie dudit au moins un second faisceau dévié reçu après propagation dans un environnement cible (20) situé à l'extérieur de ladite unité émettrice (100) ;
∘ au moins un photodétecteur (202) configuré pour convertir la partie focalisée du second faisceau dévié en un signal électrique de sortie.

2. Système d'imagerie optique (10) selon la revendication 1, dans lequel il comprend en outre une unité de commande (110) configurée pour choisir la cellule de déviation (103-i) fonctionnelle en générant un signal de commande externe correspondant.

3. Système d'imagerie optique (10) selon la revendication 2, dans lequel l'unité de commande (110) est en outre configurée pour changer, au moins une fois au cours d'une période de balayage, la cellule de déviation (103-i) fonctionnelle.

4. Système d'imagerie optique (10) selon la revendication 1, dans lequel le second champ de vision (1030) est plus large que le premier champ de vision (1020).

5. Système d'imagerie optique (10) selon la revendication 1, dans lequel le second champ de vision (1030) est compris entre 120 degrés et 180 degrés, lorsqu'il est mesuré horizontalement et/ou verticalement.

6. Système d'imagerie optique (10) selon la revendication 1, dans lequel la source électroluminescente (101) est en outre configurée pour moduler l'au moins un premier faisceau optique à l'aide d'un signal de modulation fourni par l'unité de commande (110).

7. Système d'imagerie optique (10) selon la revendication 6, dans lequel l'au moins un premier faisceau optique est modulé en intensité.

8. Système d'imagerie optique (10) selon la revendication 6, dans lequel l'au moins un premier faisceau optique est modulé en fréquence.

9. Système d'imagerie optique (10) selon la revendication 1, dans lequel le modulateur spatial de lumière (102) comprend un déflecteur acousto-optique orienté horizontalement et un déflecteur acousto-optique orienté verticalement.

10. Système d'imagerie optique (10) selon la revendication 1, dans lequel il comprend en outre un filtre optique (104) agencé entre le modulateur spatial de lumière (102) et le dispositif de déviation transmissif (103) pour éliminer les faisceaux optiques indésirables.

11. Système d'imagerie optique (10) selon la revendication 1, dans lequel il comprend en outre une unité de traitement (210) configurée pour recevoir une pluralité desdits signaux électriques de sortie obtenus à partir de la partie focalisée d'une pluralité de seconds faisceaux déviés, et pour déterminer une pluralité de caractéristiques de l'environnement cible (20), la pluralité de caractéristiques comportant des caractéristiques géométriques.

12. Système d'imagerie optique (10) selon la revendication 9, dans lequel le premier champ de vision (1020) comprend en outre un champ de vision émis (1020-t), et dans lequel le modulateur spatial de lumière (102) est configuré pour émettre au moins un faisceau optique associé à un faisceau au moins partiellement non dévié à l'intérieur du champ de vision émis (1020-t).

13. Système d'imagerie optique (10) selon la revendication 12, dans lequel il comprend en outre une unité de traitement (210) et au moins deux photodétecteurs (202), chacun étant configuré pour convertir une partie différente de la partie focalisée du second faisceau dévié, ladite partie correspondant à un sous-groupe de champs de vision élémentaires (1030-i), et dans lequel ladite unité de traitement (210) est configurée pour générer une image de multi-zones de résolution à partir de ladite partie de la partie focalisée du second faisceau dévié.

14. Système d'imagerie optique (10) selon la revendication 1, dans lequel le dispositif de focalisation de lumière (201) est une lentille convergente, de préférence une lentille de balayage passive.

15. Procédé d'imagerie comprenant les étapes consistant à :
∘ générer (601) au moins un premier faisceau optique, au moyen d'un dispositif électroluminescent (101) ;
∘ dévier (602), au moyen d'un modulateur spatial de lumière (102), l'au moins un premier faisceau optique dans une première direction de déviation à l'intérieur d'un premier champ de vision (1020) pour générer un premier faisceau dévié, en appliquant un signal de commande externe sur le modulateur spatial de lumière (102) ;
∘ générer (603), au moyen d'un dispositif de déviation transmissif passif (103) comprenant une métasurface optique formée par un agencement bidimensionnel (2D) de cellules de déviation (103-i), au moins un second faisceau dévié à partir du premier faisceau dévié à l'intérieur d'un second champ de vision (1030), le second champ de vision (1030) étant plus large que le premier champ de vision (1020) ;
∘ focaliser (604) une partie de l'au moins un second faisceau dévié reçu après propagation dans un environnement cible (20) ;
∘ convertir (605) la partie focalisée de l'au moins un second faisceau dévié en un signal électrique de sortie.

16. Procédé d'imagerie selon la revendication 15, dans lequel il comprend en outre l'étape consistant à :
∘ recevoir une pluralité desdits signaux électriques de sortie obtenus à partir de la partie focalisée d'une pluralité de seconds faisceaux déviés ;
∘ déterminer (606) une pluralité de caractéristiques de l'environnement cible (20), la pluralité de caractéristiques comportant des caractéristiques géométriques.
∘

17. Procédé d'imagerie selon l'une des revendications 15 ou 16, dans lequel il comprend en outre les étapes consistant à :
∘ convertir au moins deux parties différentes de la partie focalisée du second faisceau dévié, chaque partie correspondant à un sous-groupe de champs de vision élémentaires (1030-i) pour générer simultanément au moins deux images de l'environnement cible (20) ;
∘ générer de manière instantanée une image de multi-zones de résolution à partir des au moins deux images de l'environnement cible (20).
